# EUROPEAN PATENT SPECIFICATION

(11) **EP 3 650 736 B1**
(45) Date of publication and mention of the grant of the patent: **01.05.2024**
(21) Application number: 19208406.9
(22) Date of filing: 11.11.2019
(51) Int. Cl.: F16J 15/34

(54) **MECHANICAL SEAL DEVICE, PARTICULARLY FOR DRIVE SHAFTS IN VESSELS, WATERCRAFTS OR THE LIKE**
GLEITRINGDICHTUNGSVORRICHTUNG, INSBESONDERE FÜR ANTRIEBSWELLEN IN SCHIFFEN, WASSERFAHRZEUGEN UND DERGLEICHEN
DISPOSITIF DE GARNITURE MÉCANIQUE, EN PARTICULIER POUR DES ARBRES D'ENTRAÎNEMENT DANS DES BATEAUX, DES NAVIRES OU ANALOGUE

(30) Priority: 12.11.2018 IT 201800010264
(43) Date of publication of application: 13.05.2020
(73) Proprietor: Microtem Srl, 19126 La Spezia (SP) (IT)
(72) Inventor: Chiodetti, Mattia, 19126 La Spezia (IT); Valenti, Luca, 19126 La Spezia (IT); Larocca, Savino, 19126 La Spezia (IT)
(74) Representative: Bottino, Giovanni

(56) References cited:
- EP-A2- 0 105 616
- DE-C- 921 123
- DE-U1- 29 601 165
- GB-A- 1 256 549
- US-A1- 2004 227 299
- US-A1- 2018 017 167
- US-A1- 2018 340 614

## Description

The present invention relates to a device for mechanical sealing of a drive shaft rotatable about a rotation axis coinciding with its longitudinal axis and extending through an opening in the hull of a vessel, the device being adapted to prevent the leakage of water inside the hull through the opening and comprising a stationary portion couplable to the hull and a rotating portion which is couplable integrally to the drive shaft.

The stationary portion and the rotating portion are respectively provided with a stationary sliding annular element and a rotating sliding annular element, these annular elements being each provided with a planar contact surface, and the two contact surfaces being coplanar and placed in contact with each other.

The stationary portion is divided into a fixed portion couplable to the hull and a movable portion coupled to the fixed portion in a translatable manner in the axial direction of the drive shaft, the movable portion of which is provided with said stationary sliding ring element.

Means for thrusting the movable portion in the direction of the rotating portion are provided for maintaining contact between said contact surfaces.

Mechanical seals are created as a technical solution to isolate two environments separated by a wall provided with an opening for the passage of a drive axis, a first environment of which typically contains liquid and a second environment of which typically contains air.

In the naval architecture, the first environment is the outboard water, in which a propeller or impeller is immersed, while the second environment is the interior of the hull, wherein an engine or impeller is housed, the propeller being driven in rotation by the engine by means of said drive shaft or axle-propeller.

In all cases where this scheme is adopted, a device sealing the intersection portion between the drive shaft and the hull, avoiding water leakage while ensuring shaft rotation is needed.

Three main solutions for this technical problem are known to the state of the art in the naval field: the stuffing box, radial seals and front seals.

The stuffing box is the oldest sealing device and provides a ring system holding tight a material, such as stuffing, hemp packing or other material or felt, to keep a chamber watertight. The actual sealing of the stuffing box is rather relative, since the stuffing box, by its very nature, must allow a slight drip to ensure that the inner rings do not burn. That is, it is necessary for the fluid to carry out a lubrication.

Thereafter radial mechanical seals have been developed, i.e. containing one or more sealing rings, usually made of rubber, which actuate the seal radially.

The front seals, of which the sealing device disclosed at the beginning is part, are the devices to which the term mechanical seal generically refers and comprise two annular sealing elements sliding over each other.

Generally, in an application wherein an inboard rotor is connected and rotates a propeller or outboard impeller, the rotor itself receives an anti-motion thrust which imparts to the fluid in which the propeller is immersed.

All the above-disclosed systems are destined to loose over time, basically due to the increase in mechanical clearance between the components. This in the naval field is caused by the mobility of the propulsion line which, being made up of a plurality of mechanical components and being mechanically bound to the hull, can be subjected to increasing displacements caused by the sum of small mechanical failures and increases in clearance for the single components.

The drive shaft, which is the element on which the mechanical seal acts, is subjected to the displacements of the propulsion line, which must necessarily be compensated by the mechanical seal to avoid leakage. Such displacements may be axial, i.e. along the longitudinal axis of the drive shaft, and / or radial, i.e. in a direction perpendicular to such longitudinal axis.

The above-disclosed known systems exhibit different behaviours towards such displacements.

The stuffing box can ensure a virtually unlimited axial movement, as the drive shaft slides inside the rings actuating radially the seal, but the radial displacement allowed is very limited.

Similarly, axial compensation is absorbed in radial mechanical seals, while radial compensation is limited or very limited in some cases: manufacturers of such devices often report a maximum displacement of .5 mm.

On the other hand, the mechanical seals on the front ensure that, in addition to the axial displacement, radial displacement can be compensated for. Some geometries can even compensate for 20 or 30 mm.

However, since it is necessary to maintain contact between the sliding annular elements, which have the contact surfaces in a plane perpendicular to the longitudinal axis of the drive shaft, the axial displacement is generally compensated by an elastic suspension that forces one portion of the mechanical seal towards the other. Such an elastic suspension typically consists of a bellows, a spring or a plurality of springs. It may be provided an elastic suspension adapted to thrust the stationary sliding annular element against the rotating sliding annular element or vice versa, or each annular element may be thrust toward the other by its own elastic suspension.

In all these solutions there is an axial compensation limit which always makes reference to the design limit of the elastic suspension.

A spring, for example, defines a maximum and minimum compression and at each compression movement it generates a load which is usually measured in Newton.

In order to compensate for the radial and axial movements of the drive shaft, this spring must generate a load being sufficient to move one of the two annular elements by holding it against the back of the other annular element, to actuate the operating principle of the front seals.

The thrust exerted by the elastic suspension is *per se* variable depending on the compression. In addition, when the propulsion line is subjected to increasingly important axial shifts over time, the spring can be forced to extend to conditions where it fails to ensure the right load.

Similarly, the spring itself changes its elastic behaviour over time, as it tends to deform and, subsequently, to lose thrust capacity. Finally, in the case of a rubber bellows, there is not only a decrease in the thrust exerted over time, but also an aging of the material that therefore inhibits the operation of the elastic suspension.

Therefore, there is an unmet need for a mechanical seal in the state of the art that allows to ensure a constant contact thrust between the sliding annular elements and to adequately compensate for axial shifts of the drive shaft that may become increasingly significant over time.

EP0105616A2 discloses a device according to the preamble of claim 1.

The present invention aims to solve the technical problems set forth above in relation to the mechanical seals currently known with a mechanical sealing device as described at the beginning, wherein said thrusting means further consist of magnetic attracting means between the stationary sliding annular element and the rotating sliding annular element.

According to the present invention, therefore, the contact between the surfaces of the two sliding annular elements is not guaranteed by elastic elements such as springs or bellows, but by the magnetic attraction exerted between the two sliding annular elements.

This condition allows the mechanical sealing device to always ensure the same contact thrust between the sliding annular elements independently of the radial displacement and, above all, of the axial displacement.

According to the invention, said fixed portion of the stationary portion is provided with an end sleeve extending in the direction of the rotating portion and said movable portion has a housing seat of said sleeve, such that the movable portion surrounds the sleeve and can slide thereon.

At this time, the possibility of movement of the mechanical seal in the axial direction is determined by the possibility of the movable portion sliding relative to the sleeve of the fixed portion.

By increasing the height, i.e. the extension in the axial direction, of the sleeve and correspondingly that of the movable portion, in particular its sleeve housing seat, the seal can compensate for any axial movement by keeping the force thrusting the rotating annular sliding element against the stationary annular sliding element constant.

Likewise, by increasing the area of the contact surfaces of the two sliding annular elements during the design step, the mechanical sealing device can radially compensate for any movement without thereby reducing the thrust against each other of the sliding annular elements.

According to one embodiment, there is provided a sealing ring interposed between the inner side wall of the housing seat of the movable portion and the outer side wall of the sleeve.

In one embodiment, the magnetic attracting means include said rotating sliding annular element comprising ferromagnetic material.

This allows the stationary sliding annular element and / or the movable portion of the stationary portion to be provided as an active element for magnetic attraction, which acts as a support for the sliding annular element, while the rotating sliding annular element acts as an attracted passive element.

According to a first embodiment, the magnetic attracting means comprise one or more permanent magnets inserted into one or more recesses provided within the stationary sliding annular element.

Advantageously, the recesses are insulated from the outside, such that the magnets inserted therein are not reachable by the sea water capable of causing corrosion.

In a second embodiment, the magnetic attracting means comprise a magnetic mixture of rare earth elements housed within one or more recesses provided within the stationary sliding ring element.

According to a third embodiment variant, the magnetic means comprise the movable portion of the stationary portion consisting of a mixture of magnetic powders of rare earth elements and of graphite powder cold-pressed in a mould.

In a fourth embodiment, the magnetic means comprise the movable portion of the stationary portion consisting of permanent magnetic material.

However, it is possible to reverse what has been disclosed above and provide, *mutatis mutandis,* for the magnetically attracted stationary sliding element and the rotating sliding element and / or the magnetically active rotating portion.

Thanks to the aforementioned technical features, the magnetic sealing device according to the present invention can always operate under optimal conditions, independently of the vibrations and the rotation speed, so as to ensure not only a radial movement but also a virtually unlimited axial movement, always keeping the same contact force between the sliding ring elements.

These and other features and advantages of the present invention will become clearer from the following description of some non-limiting exemplary embodiments illustrated in the attached drawings in which:

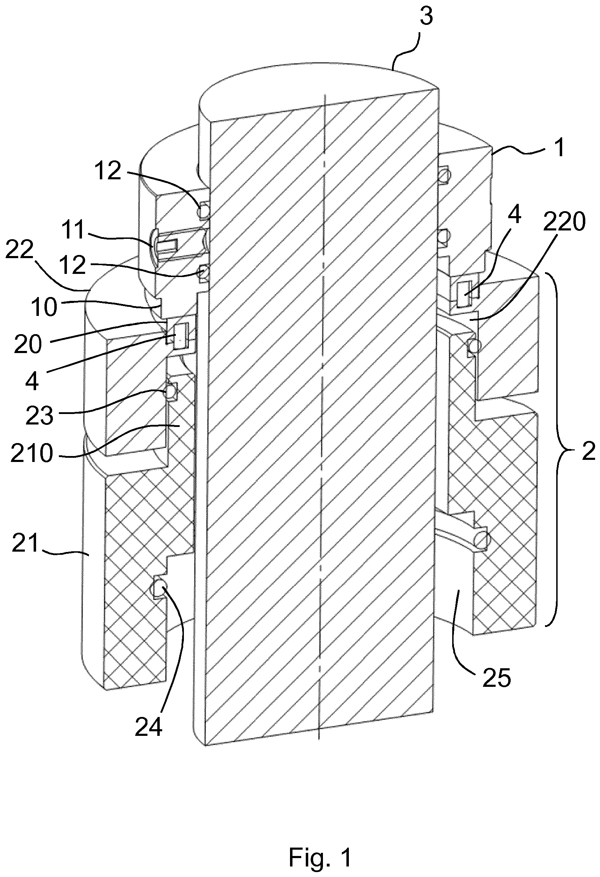

fig. 1 shows a cross-sectional isometric view of the electronic driving device;

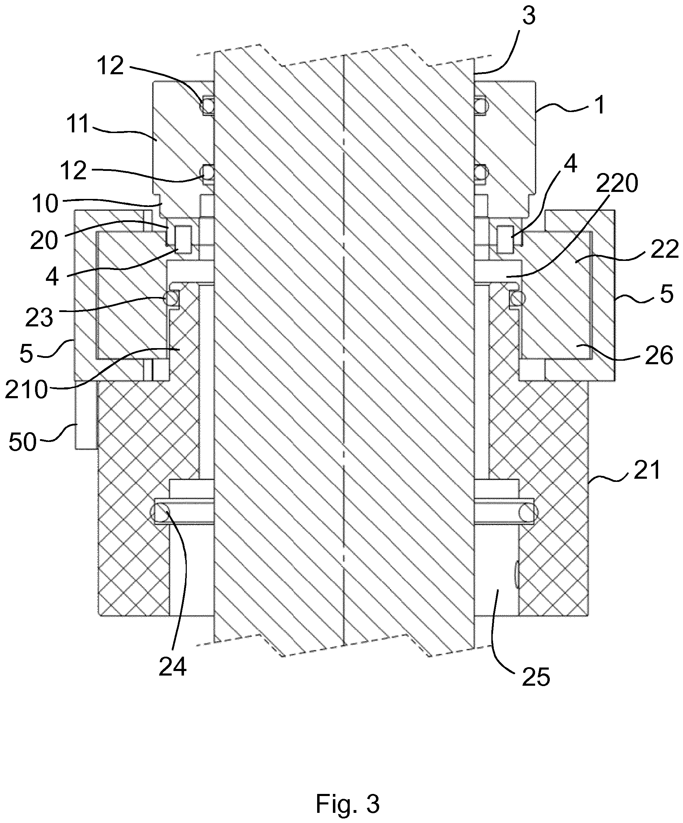

figs. 2 and 3 illustrate two sectional views along different planes;
fig. 4 illustrates the magnetic seal device in the assembled condition.

The figures illustrate the mechanical sealing device of a drive shaft 3 extending through an opening in the hull of a vessel. The device is adapted to prevent the leakage of water inside the hull through the opening, not shown in the figure.

The drive shaft 3 is rotatable around an axis of rotation coincident with its own longitudinal axis and constitutes the transmission element of the rotational motion from a propulsion line comprising an inboard motor to an outboard propeller.

The mechanical sealing device comprises a stationary portion 2 couplable to the hull and a rotating portion 1 couplable integrally to the drive shaft 3.

The rotating portion 1 is rotatably coupled to the drive shaft 3 by means of grub screws 11. Alternatively or in combination, the rotating portion 1 may be coupled to the drive shaft 3 by means of a clamp or holder.

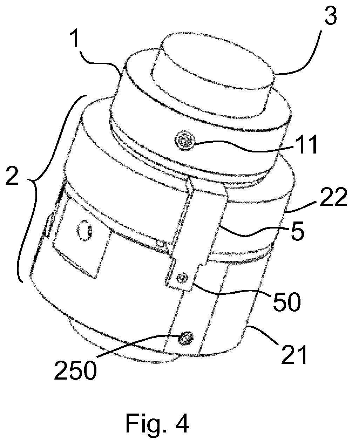

In the example in the figure, the stationary portion 2 has a rapid screw seat 25 on a receiver, not shown in the figure, on which the mechanical sealing device can be fixed by means of the grub screws 250 of figure 4. Alternatively, however, a flange couplable with the hull may be provided.

The stationary portion 2 and the rotating portion 1 are provided with a stationary sliding annular element 20 and a rotating sliding annular element 10, respectively. Such sliding annular elements 10 and 20 are each provided with a planar contact surface, the contact surfaces of which are coplanar and contacted to each other.

In the example in the figure, the rotatable sliding annular element 10 is integral with the rotatable portion 1. Alternatively, the rotating sliding annular element 10 may be an element which is separate and fixed to the rotating portion 1.

The stationary sliding annular element 20 is instead a stand-alone element, and is secured to the stationary portion 2 which then acts as a support therefor. Preferably, the stationary sliding annular element 20 is glued to the stationary portion, but other fastening systems, such as screws or the like, can be provided.

The stationary portion 2 is divided into two separate parts: a fixed portion 21 couplable to the hull and a movable portion 22 coupled to the fixed portion 21 in a translatable manner in the axial direction of the drive shaft 3. The stationary sliding annular element 20 is attached to the movable portion 22.

Means for thrusting the movable portion 22 in the direction of the rotating portion 1 are provided for maintaining contact between the contact surfaces of the two sliding annular elements 10 and 20. Such means for thrusting consist of magnetic attracting means between two sliding annular elements 10 and 20.

As an alternative to the embodiment illustrated in the figures, it is possible to provide a rotating portion 1 divided into two fixed and movable portions, respectively, as illustrated for the stationary portion 2, which may instead be provided as a single piece. In a further variation it is possible to provide both the rotating portion 1 and the stationary portion 2 divided each into a fixed portion and a movable portion.

The fixed portion 21 of the stationary portion 2 is provided with a tubular shaped end sleeve 210 extending in the direction of the rotating portion 1. Correspondingly, the movable portion 22 has a housing 220 of said sleeve 210, such that the movable portion 22 is fitted on and around the sleeve 210, being able to slide thereon.

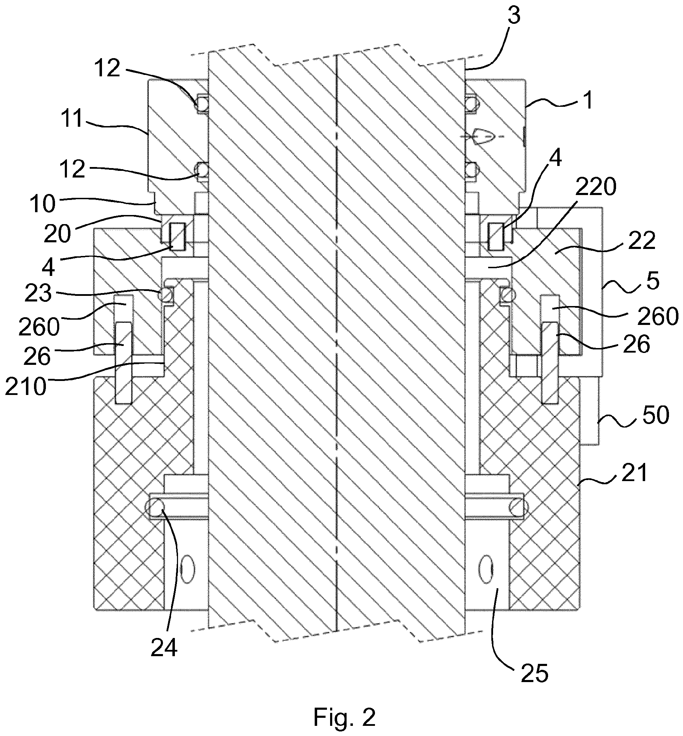

The movable portion 22 is integral in rotation with the fixed portion 21 and can only move in the axial direction thanks to the presence of pins 26 visible in figure 2, which can slide in corresponding seats 260 provided in the movable portion 22.

The embodiment example of the figures is held tight by four sealing rings or O-rings.

A sealing ring 23 is provided interposed between the inner side wall of the housing seat 220 of the movable portion 22 and the outer side wall of the sleeve 210. In the example shown in the figure, on the side wall of the sleeve 210 it is obtained a recess for housing the sealing ring 23, while the inner side wall of the housing seat 220 is smooth. Alternatively, however, it is possible to provide for the groove housing the sealing ring 23 on the inner side wall of the housing seat 220, while keeping the side wall of the sleeve 210 smooth.

The rotating portion 1 is sealed on the drive shaft 3, to which it is rotatably coupled by the grub screws 11, by means of two sealing rings 12, housed in two corresponding holes formed in the inner wall of the rotating portion 1. However, only one sealing ring 12, or three or more, may be provided.

A last sealing ring 24 is provided in a recess formed in the inner wall of the rapid screw seat 25, to seal between the fixed portion 21 of the stationary portion 2 and the receiver.

In the embodiment illustrated in the figures, the rotating portion 1 and in particular the rotating annular sliding element 10 remains bound to the stationary annular sliding element 20 by means of a series of magnets 4, complying with the operating principle of the front seals.

In particular, the rotating annular sliding element 10 comprises ferromagnetic material. In the embodiment of the figures, wherein the rotating sliding annular element 10 is integral with the rotating portion 1, the entire rotating portion 1 is made of ferromagnetic material. One possible suitable material is super duplex steel, but other ferromagnetic materials may also be used.

A plurality of permanent magnets 4 is inserted into a corresponding number of recesses provided within the annular stationary sliding element 20. Alternatively, it is possible to provide a single magnet 4 inserted into a special groove obtained in the annular stationary sliding element 20, for example a single annular magnet.

The permanent magnets 4 may be for example neodymium magnets, or other types of permanent magnets.

Advantageously, in the embodiment of the figures, the recesses are obtained in the annular stationary sliding element 20 with their openings facing away from the rotating portion 1. In this way, once the magnets 4 are inserted into the recesses, the stationary sliding annular element 20 is fixed to the movable portion 22 of the stationary portion 2 by shutting and sealing the recess openings. This prevents magnets 4 from coming into contact with sea water that may cause corrosion of the magnets themselves. As mentioned above, preferably, the stationary sliding annular element 20 is glued to the stationary portion to seal the magnets inside the respective recesses, but other fastening systems, such as screws or the like, can be provided.

Preferably, the stationary sliding annular element 20 consists of graphite.

Alternative embodiments of the magnetic attracting means may be provided with respect to that illustrated in the figures: a magnetic mixture of rare earth elements housed within one or more recesses provided within the stationary sliding annular element; the movable portion of the stationary portion consisting of a mixture of magnetic powders of rare earth elements and of graphite powder cold-pressed in a mould; the movable portion of the stationary portion consisting of permanent magnetic material.

The mechanical sealing device is provided to the installer provided with retaining elements 5 of the movable portion 22 of the stationary portion 2 in a predefined position and suitable for the installation of the device, in an operation typically known as "preloading" in the front mechanical seals with springs.

Each retaining element 5 consists of a C-shaped element identifying a recess of dimensions corresponding to those of the movable portion 22 and can then be applied to the movable portion 22. The retaining element 5 further has a fastening plate 50 extending in the direction of the fixed portion 21 of the stationary portion 2. This fastening plate 50 is provided with a threaded hole for a screw that penetrates the fastening plate 50 and fits into a corresponding hole on the fixed portion 21, locking the position of the retaining element 5.

Once the mechanical seal device is positioned, it is secured to the receiver by the grub screws 250 and to the drive shaft 3 by the grub screws 11. At this point the retaining elements 5 are removed and the device is ready to operate.

## Claims

1. Device for mechanical sealing of a drive shaft (3) rotatable about a rotation axis coinciding with its longitudinal axis and extending through an opening in the hull of a vessel, the device being adapted to prevent the leakage of water inside the hull through the opening and comprising a stationary portion (2) couplable to the hull and a rotating portion (1) which is couplable integrally to the drive shaft (3),
the stationary portion (2) and the rotating portion (1) being respectively provided with a stationary sliding annular element (20) and a rotating sliding annular element (10), these annular elements (10, 20) being each provided with a planar contact surface, and the two contact surfaces being coplanar and placed in contact with each other,
wherein, the stationary portion (2) is divided into a fixed portion (21) couplable to the hull and a movable portion (22) coupled to the fixed portion (21) in a translatable manner in the axial direction of the drive shaft (3), the movable portion (22) of which is provided with said stationary sliding ring element (20),
means for thrusting the movable portion (22) in the direction of the rotating portion (1) being provided for maintaining contact between said contact surfaces,
**characterised in that** said means for thrusting consists of magnetic attracting means (4) between the stationary sliding annular element (20) and the rotating sliding annular element (10),
wherein said fixed portion (21) of the stationary portion (2) is provided with an end sleeve (210) extending in the direction of the rotating portion (1) and said movable portion (22) has a housing seat (220) of said sleeve (210), such that the movable portion (22) surrounds the sleeve (210) and can slide thereon.

2. Device according to claim 1, wherein sealing ring (23) is provided interposed between the inner side wall of the housing seat (220) of the movable portion (22) and the outer side wall of the sleeve (210).

3. Device according to one or more of the preceding claims, wherein the magnetic attracting means include said rotating sliding annular element (10) comprising ferromagnetic material.

4. Device according to one or more of the preceding claims, wherein the magnetic attracting means comprise one or more permanent magnets (4) inserted into one or more recesses provided within the stationary sliding annular element (20).

5. Device according to one or more of the preceding claims, wherein the magnetic attracting means comprise a magnetic mixture of rare earth elements housed within one or more recesses provided within the stationary sliding ring element (20).

6. Device according to one or more of the preceding claims, wherein the magnetic attracting means comprise the movable portion (22) of the stationary portion (2) consisting of a mixture of magnetic powders of rare earth elements and of graphite powder cold-pressed in a mould.

7. Device according to one or more of the preceding claims, wherein the magnetic attracting means comprise the movable portion (22) of the stationary portion (2) consisting of permanent magnetic material.

## Patentansprüche

1. Vorrichtung zur mechanischen Abdichtung einer Antriebswelle (3), die um eine mit ihrer Längsachse zusammenfallende Drehachse drehbar ist und sich durch eine Öffnung im Rumpf eines Schiffes erstreckt, wobei die Vorrichtung dazu ausgelegt ist, das Austreten von Wasser im Inneren des Rumpfes durch die Öffnung zu verhindern, und einen stationären Abschnitt (2), der mit dem Rumpf koppelbar ist, und einen rotierenden Abschnitt (1), der einstückig mit der Antriebswelle (3) koppelbar ist, umfasst, wobei der stationäre Abschnitt (2) und der rotierende Abschnitt (1)
jeweils mit einem stationären Gleitringelement (20) und einem rotierenden Gleitringelement (10) versehen, wobei diese Ringelemente (10, 20) jeweils mit einer ebenen Kontaktfläche versehen sind und die beiden Kontaktflächen koplanar und in Kontakt miteinander stehen,
wobei der stationäre Abschnitt (2) in einen festen Abschnitt (21), der an den Rumpf koppelbar ist, und einen beweglichen Abschnitt (22) unterteilt ist, der in axialer Richtung der Antriebswelle (3) verschiebbar an den festen Abschnitt (21) gekoppelt ist, wobei der bewegliche Abschnitt (22) davon mit dem stationären Gleitringelement (20) versehen ist,
wobei Mittel zum Schieben des beweglichen Abschnitts (22) in Richtung des rotierenden Abschnitts (1) vorgesehen sind, um den Kontakt zwischen den Kontaktflächen aufrechtzuerhalten,
**dadurch gekennzeichnet, dass** die Mittel zum Schieben aus magnetischen Anziehungsmitteln
(4) zwischen dem stationären Gleitringelement (20) und dem rotierenden Gleitringelement (10) bestehen,
wobei der feste Abschnitt (21) des stationären Abschnitts (2) mit einer Endhülse (210) versehen ist, die sich in Richtung des rotierenden Abschnitts (1) erstreckt, und der bewegliche Abschnitt (22) einen Gehäusesitz (220) der Hülse (210) aufweist, sodass der bewegliche Abschnitt (22) die Hülse (210) umgibt und darauf gleiten kann.

2. Vorrichtung nach Anspruch 1, wobei ein Dichtring (23) zwischen der inneren Seitenwand des Gehäusesitzes (220) des beweglichen Abschnitts (22) und der äußeren Seitenwand der Hülse (210) vorgesehen ist.

3. Vorrichtung nach einem oder mehreren der vorhergehenden Ansprüche, wobei die magnetischen Anziehungsmittel das rotierende Gleitringelement (10) beinhalten, das ferromagnetisches Material umfasst.

4. Vorrichtung nach einem oder mehreren der vorhergehenden Ansprüche, wobei die magnetischen Anziehungsmittel einen oder mehrere Permanentmagnete (4) umfassen, die in eine oder mehrere Aussparungen eingesetzt sind, die innerhalb des stationären Gleitringelements (20) vorgesehen sind.

5. Vorrichtung nach einem oder mehreren der vorhergehenden Ansprüche, wobei die magnetischen Anziehungsmittel eine magnetische Mischung von Seltenerdelementen umfassen, die in einer oder mehreren Aussparungen untergebracht sind, die in dem stationären Gleitringelement (20) vorgesehen sind.

6. Vorrichtung nach einem oder mehreren der vorhergehenden Ansprüche, wobei die magnetischen Anziehungsmittel den beweglichen Abschnitt (22) des stationären Abschnitts (2) umfassen, der aus einer Mischung aus magnetischen Pulvern von Seltenerdelementen und aus in einer Form kaltgepresstem Graphitpulver besteht.

7. Vorrichtung nach einem oder mehreren der vorhergehenden Ansprüche, wobei die magnetischen Anziehungsmittel den beweglichen Abschnitt (22) des stationären Abschnitts (2) umfassen, der aus permanentmagnetischem Material besteht.

## Revendications

1. Dispositif d'étanchéité mécanique d'un arbre d'entraînement (3) rotatif autour d'un axe de rotation coïncidant avec son axe longitudinal et s'étendant à travers une ouverture dans la coque d'un navire, le dispositif étant adapté pour empêcher la fuite d'eau à l'intérieur de la coque à travers l'ouverture et comprenant une partie stationnaire (2) pouvant être couplée à la coque et une partie rotative (1) qui peut être couplée d'un seul tenant à l'arbre d'entraînement (3), la partie stationnaire (2) et la partie rotative (1) étant
respectivement pourvus d'un élément annulaire coulissant stationnaire (20) et d'un élément annulaire coulissant rotatif (10), ces éléments annulaires (10, 20) étant chacun pourvus d'une surface de contact plane, et les deux surfaces de contact étant coplanaires et placées en contact l'une avec l'autre,
dans lequel, la partie stationnaire (2) est divisée en une partie fixe (21) pouvant être couplée à la coque et une partie mobile (22) couplée à la partie fixe (21) de manière à pouvoir être translatée dans la direction axiale de l'arbre d'entraînement (3), dont la partie mobile (22) est pourvue dudit élément annulaire coulissant stationnaire (20),
des moyens pour pousser la partie mobile (22) dans la direction de la partie rotative (1) étant prévus pour maintenir le contact entre lesdites surfaces de contact,
**caractérisé en ce que** les moyens pour pousser consistent en des moyens d'attraction magnétique
(4) entre l'élément annulaire coulissant stationnaire (20) et l'élément annulaire coulissant rotatif (10),
dans lequel ladite partie fixe (21) de la partie stationnaire (2) est pourvue d'un manchon d'extrémité (210) s'étendant dans la direction de la partie rotative (1) et ladite partie mobile (22) a un siège de logement (220) dudit manchon (210), de sorte que la partie mobile (22) entoure le manchon (210) et peut glisser sur celui-ci.

2. Dispositif selon la revendication 1, dans lequel une bague d'étanchéité (23) est prévue interposée entre la paroi latérale intérieure du siège de logement (220) de la partie mobile (22) et la paroi latérale extérieure du manchon (210).

3. Dispositif selon une ou plusieurs des revendications précédentes, dans lequel les moyens d'attraction magnétique comprennent ledit élément annulaire coulissant rotatif (10) comprenant un matériau ferromagnétique.

4. Dispositif selon une ou plusieurs des revendications précédentes, dans lequel les moyens d'attraction magnétique comprennent un ou plusieurs aimants permanents (4) insérés dans un ou plusieurs évidements prévus à l'intérieur de l'élément annulaire coulissant stationnaire (20).

5. Dispositif selon une ou plusieurs des revendications précédentes, dans lequel les moyens d'attraction magnétique comprennent un mélange magnétique d'éléments de terres rares logés à l'intérieur d'un ou plusieurs évidements prévus à l'intérieur de l'élément annulaire coulissant stationnaire (20).

6. Dispositif selon une ou plusieurs des revendications précédentes, dans lequel les moyens d'attraction magnétique comprennent la partie mobile (22) de la partie stationnaire (2) constituée d'un mélange de poudres magnétiques d'éléments de terres rares et de poudre de graphite pressée à froid dans un moule.

7. Dispositif selon une ou plusieurs des revendications précédentes, dans lequel les moyens d'attraction magnétique comprennent la partie mobile (22) de la partie stationnaire (2) constituée d'un matériau magnétique permanent.
